# EUROPEAN PATENT SPECIFICATION

(11) **EP 2 286 389 B1**
(45) Date of publication and mention of the grant of the patent: **30.10.2013**
(21) Application number: 09758615.0
(22) Date of filing: 27.05.2009
(51) Int. Cl.: G06Q 10/08, G07F 17/10

(54) **SYSTEM AND METHOD FOR SAFE RECEIVING AND/OR DELIVERING A PARCEL**
SYSTEM UND VERFAHREN FÜR SICHERES EMPFANGEN UND/ODER ABSCHICKEN EINES PAKETS
SYSTÈME ET PROCÉDÉ POUR LA RÉCEPTION ET/OU LA DÉLIVRANCE SÛRES D'UN COLIS

(30) Priority: 02.06.2008 SE 0801299
(43) Date of publication of application: 23.02.2011
(73) Proprietor: Combiplate AB, 551 17 Jönköping (SE)
(72) Inventor: BIRGING, Torbjörn, S-711 76 Storå (SE); PALM, Michael, S-553 10 Jönköping (SE); SJÖDIN, Tor, S-232 53 Åkarp (SE)
(74) Representative: Andersson, Mikael Per Robert
(86) International application number: PCT/SE2009/050605
(87) International publication number: WO 2009/148388

(56) References cited:
- WO-A1-00/65499
- WO-A1-01/39638
- WO-A1-2008/043406
- WO-A1-2008/043406
- WO-A2-01/00069
- WO-A2-01/52199
- WO-A2-01/52199
- WO-A2-2006/099045
- DE-A1- 10 301 137
- FR-A1- 2 865 061
- JP-A- 2008 123 510
- KR-A- 20080 001 389
- US-A1- 2007 000 989
- US-A1- 2007 078 797
- US-A1- 2007 118 488
- US-B1- 6 370 446

## Description

### Field of invention

The present invention relates to a system and method for safe receiving and/or delivering a parcel provided with a parcel identification tag.

### Technical Background

Sending a parcel from a sender to a recipient by means of a forwarding agent can today be performed in various ways, wherein the steps in the chain of delivery is handled differently.

In one example, the sender walks with the parcel to a posting box places the parcel inside the posting box, the parcel being provided with the recipients address and preferably stamps with the correct value for sending the parcel. At the time of hour of collection the forwarding agent arrives to the postal box for postal collection collecting the parcel (among with other parcels posted in that specific posting box). Next, the forwarding agent sorts the parcels and delivers the parcel (or a notification of where to pick up the parcel) to the recipients letter box or letter drop. However, this way of sending parcels lack the ability for the sender to know if, and optionally even when, the recipient gets the parcel. Even further, this way of sending parcels do not establish well-defined points of delivery when and where the liability of the forwarding agent starts and ends. Thus, well-defined points of delivery when the sender is delivering the parcel to the forwarding agent and when the forwarding agent is delivering the parcel to the recipient is not established.

In order to establish the above mentioned well-defined points of delivery and in order for the sender to know if, and optionally even when, the recipient gets the parcel, sending receipts and advice of delivery receipts are used. For example; the forwarding agent gives a piece of the freight document (a sending receipt) to the sender when the sender delivers the parcel to the forwarding agent and the recipient sign an advice of receipt when receiving the parcel from the forwarding agent. In both of these scenarios the receipts is handled manually. Such a manually handled procedure is time consuming and imply that the forwarding agent meets both the sender and the recipient in person.

The document WO2008/043406 A1 discloses a box system for parcels with RFID tags. The RFID tags comprise information regarding e.g. the size of the parcel. This information is used by the box system in order to open a free compartment in the box system. It also discloses that it may be useful to check if a parcel is stored in a compartment. This may be performed after closing the compartment or by cyclically polling. The document WO 01/52199 A2 discloses a method for delivery of a parcel.

Thus, there is a need for an improved system and method for receiving and/or delivering a parcel with well-defined points of receiving and delivering.

### Summary of invention

One object of the present invention is to provide an automatic system and method for receiving and/or delivering a parcel with well-defined points of receiving and delivering.

The above object is achieved by a system and methods for safe delivery according to the independent claims.

A system for safe receiving and/or delivering of a parcel provided with a parcel identification tag is provided. The system comprises a parcel receiving and/or delivering unit adapted to receive and/or deliver a parcel, said parcel receiving and/or delivering unit comprises: a parcel information receiving unit adapted to receive information from the parcel identification tag, and a user information receiving unit adapted to receive information from a user identification tag, which is associated with a user for identifying the user.

By means of the parcel information receiving unit and the user information receiving unit is it possible to receive information about a parcel and the user placing or picking up the parcel. The system makes it possible to know which user is placing and/or picking up a specific parcel. Further the information can also be used to issue receipts on the placing and picking up of the parcel. Hence, an automatic system for receiving and/or delivering a parcel with well-defined points of receiving and delivering is achieved. For example, by receiving information about the user placing a parcel in the parcel receiving and/or delivering unit as well as receiving information about the parcel a well defined point of delivering the parcel is achieved. Also, by receiving information about the user picking up the parcel at the parcel receiving and/or delivering unit as well as receiving information about the parcel a well defined point of the recipient receiving the parcel is achieved. Thus, by using the system above a safe, unbroken chain of delivery between a sender and a recipient is achieved. In the chain of delivery four receipts can be issued. A receipt can be issued a) when the sender is posting a parcel in a first parcel receiving and/or delivering unit, b) when a forwarding agent is picking up the parcel at said first parcel receiving and/or delivering unit, c) when the forwarding agent is placing the parcel in a second parcel receiving and/or delivering unit, and d) when the recipient is picking up the parcel at said second parcel receiving and/or delivering unit. Thus, four different receipts can be issued, two defining the points of placing a parcel by the sender and the picking up of the parcel by the forwarding agent at the first parcel receiving and/or delivering unit and two defining the points of placing the parcel by the forwarding agent and the picking up of the parcel by the recipient at the second parcel receiving and/or delivering unit. An advantage with this system is that it admits that the placing of a parcel by the sender and picking up of the parcel by the forwarding agent can appear at different time of hour. Consequently, the present system also admit that the placing of the parcel by the forwarding agent can appear at a different time of hour than the picking up of the parcel by the recipient. Thus, still with well defined points of delivery established, the forwarding agent do not need to meet the sender or the recipient in person when receiving and delivering a parcel.

The information associated with the parcel identification tag can comprise information about a recipient, such as the recipients name and address. Further, the information associated with the parcel identification tag can comprise information about a sender, such as the senders name and address. The information associated with the parcel identification tag can also comprise information about a forwarding agent and/or about a specific desired operating mode for the forwarding agent. The information associated with the parcel identification tag can also be linked to a database. Further, the information associated with the user identification tag can be linked to said database. The information associated with a specific parcel identification tag can be linked to information associated with specific user tags related to specific users, such as a sender of the parcel, a forwarding agent of the parcel and a recipient of the parcel, in said database. The parcel receiving and/or delivering unit can be adapted to communicate with said database.

All the information associated with a specific parcel identification tag can be stored as a specific profile in the database. The database can further be liked to an internet website. The internet website can be accessible by the sender, the forwarding agent and the recipient. When sending a parcel the sender can fill in information in said database by logging into the website linked to the database. For example, the sender can fill in information about the parcel identification tag (e.g. a tag number of the parcel identification tag), the recipients name and address, the desired forwarding agent, the desired operating mode for the forwarding agent (e.g. urgent, normal or economic delivery), the credit card number from which a cost for the delivery of the parcel can be charged and other suitable information usable when sending and/or delivering parcels. By filling in the information of the tag number of the parcel identification tag all the other information filled in by the sender can be associated with the specific parcel having the parcel identification tag with the specific tag number. By linking the information about the parcel with the information about the sender, the forwarding agent and the recipient in said database, sorting and delivering of the parcels will be more effective.

The information associated with a parcel identification tag can be both real (such as a typed name and address of the recipient), information linked to a profile in said database or a combination thereof. For example the address of the recipient can be written on the parcel identification tag as well as be provided in a profile of said database, whereas information about the senders credit card number will suitably only be provided in said profile in said database.

The parcel receiving and/or delivering unit can further comprise a lockingly closeable parcel storage compartment to which access is granted only after the user information receiving unit has received information of the user. The parcel storage compartment can be used for placing a parcel either when sending or when delivering the parcel. Providing the parcel storage compartments with lockingly closeable storage compartment doors makes it possible to only grant access to the parcel storage compartment to a user after the user information receiving unit has received information from the user identification tag identifying the user. Thus, the user identifies herself by the user identification tag and subsequently the lock to the lockingly closeable storage compartment door is unlocked making the door possible to open. For example, if the user is the intended recipient of the parcel the lockingly closeable storage compartment door is unlocked only if the user information receiving unit has received information of the user identification tag identifying the user as the intended recipient. In the example above the verification that the user is the intended recipient (thus a trusted user) can be performed by checking if the user identifying herself by the user identification tag is the recipient by comparing with information in said database.

The parcel identification tag can be a radio frequency identification tag. Further, the user identification tag can be a radio frequency identification tag. Radio frequency identification tags are a secure and relatively cheap way of providing the parcel and/or the user with an identification tag. The technique is simple and can easily be implemented in the present invention. As an alternative an identification tag based on Bluetooth or Near Field Communication (NFC) can be used.

The parcel receiving and/or delivering unit can be placed in a multi-family house. Other conceivable placings can be in a grocery store, bank or postal offices, or in office buildings where several companies rent their office space.

A method for safe delivery of a parcel provided with a parcel identification tag, from a first user sending the parcel to a second user acting as a forwarding agent of the parcel is also provided. The method comprises the steps of: receiving information, by a user information receiving unit adapted to receive information from a user identification tag which is associated with the first user for identification of the user sending the parcel, granting the first user (who is sending the parcel) access to a parcel storage compartment, in which the parcel can be placed, checking if the parcel is placed in the parcel storage compartment, receiving information about the placed parcel by a parcel information receiving unit adapted to receive information from the parcel identification tag, receiving information, by a user information receiving unit adapted to receive information from a user identification tag which is associated with the second user for identification of the user acting as forwarding agent of the parcel, and granting the second user, acting as forwarding agent of the parcel, access to the parcel storage compartment, in which the parcel is placed.

By receiving information about the sender placing a parcel in the parcel receiving and/or delivering unit, as well as receiving information about the parcel, a well defined point of placing the parcel is achieved. Also, by receiving information about the forwarding agent picking up the parcel at the parcel receiving and/or delivering unit, as well as receiving information about the parcel, a well defined point of picking up the parcel is achieved. In each of these steps a receipt can be issued and thus the sender posting a parcel to a forwarding agent can be tracked and a safe delivery from the sender to the forwarding agent is achieved. An advantage with the present method is that it admits that the placing of a parcel by the sender and picking up of the parcel by the forwarding agent can appear at different time of hour. The method for safe delivery of a parcel provided with a parcel identification tag, from a first user sending the parcel to a second user acting as a forwarding agent of the parcel can further comprise the step of locking the parcel storage compartment, which is lockingly closeable. By locking the parcel storage compartment it is ensured that no unauthorised person can get access to the parcel storage compartment. Before locking the parcel storage compartment a check can be made whether or not a parcel is placed in the parcel storage compartment.

The method for safe delivery of a parcel provided with a parcel identification tag, from a first user sending the parcel to a second user acting as a forwarding agent of the parcel can further comprise the step of sending information about the placed parcel to the second user acting as forwarding agent of the parcel. This step gives the advantage that the forwarding agent only needs to go to the parcel receiving and/or delivering unit if a sender actually has placed a parcel in said parcel receiving and/or delivering unit.

The method for safe delivery of a parcel provided with a parcel identification tag, from a first user sending the parcel to a second user acting as a forwarding agent of the parcel can further comprise the step of checking if the second user, acting as forwarding agent of the parcel, is a trusted user and only thereafter granting the second user access to the parcel storage compartment. This check can e.g. be performed by comparing the information received from the forwarding agents user identification tag with the information in said database concerning the intended forwarding agent.

A method for safe delivery of a parcel provided with a parcel identification tag, from a second user acting as a forwarding agent of the parcel to a third user being the recipient of the parcel is also provided. The method comprises the steps of: receiving information, by a user information receiving unit adapted to receive information from a user identification tag which is associated with the second user for identification of the forwarding agent delivering the parcel, granting the second user, acting as a forwarding agent, access to a parcel storage compartment, in which the parcel can be placed, checking if the parcel is placed in the parcel storage compartment, receiving information from the parcel identification tag by a parcel information receiving unit adapted to receive information from the parcel identification tag, receiving information, by a user information receiving unit adapted to receive information from a user identification tag which is associated with the third user for identification of the recipient of the parcel, and granting the third user, being the (intended) recipient of the parcel, access to the parcel storage compartment, in which the parcel is placed.

The method for safe delivery of a parcel provided with a parcel identification tag, from a second user acting as a forwarding agent of the parcel to a third user being the recipient of the parcel can further comprise the step of locking the parcel storage compartment, which is lockingly closeable.

The method for safe delivery of a parcel provided with a parcel identification tag, from a second user acting as a forwarding agent of the parcel to a third user being the recipient of the parcel can further comprise the step of providing information about the placed parcel to the third user, being the recipient of the parcel.

The method for safe delivery of a parcel provided with a parcel identification tag, from a second user acting as a forwarding agent of the parcel to a third user being the recipient of the parcel can further comprise the step of checking if the third user receiving the parcel is the correct recipient and only thereafter granting the third user access to the parcel storage compartment.

### Brief description of the drawings

The invention will by way of example be described in more detail with reference to the appended schematic drawings, which shows a presently preferred embodiment of the invention.
Figure 1 shows an embodiment of a parcel receiving and/or delivering unit according to the present invention.
Figure 2A-E schematically show the placing of a parcel by a sender.
Figure 3A-D schematically show the picking up of the parcel by a forwarding agent.
Figure 4A-E schematically show the delivering of the parcel by the forwarding agent.
Figure 5A-D schematically show the picking up of the parcel by a recipient.
Figure 6A is a side and Figure 6B is a front view of an alternative embodiment not forming part of the present invention of a parcel receiving and/or delivering unit used for posting parcels by a sender.

### Detailed description of preferred embodiments

The present invention relates to a system and method for safe receiving and/or delivering of one or more parcels.

According to the invention is each parcel provided with a parcel identification tag. The parcel identification tag can be a radio frequency identification tag (RFID-tag). Other types of suitable identification tags also can be used, such as a tag based on Bluetooth technology or Near Field Communication (NFC).

Below three different types of users are discussed; a first user (the sender sending a parcel), a second user (acting as a forwarding agent of the parcel), and a third user (being the recipient of the parcel). In the rest of the description they will be denoted the sender, the forwarding agent and the recipient, respectively.

Each user (the sender, the forwarding agent and the recipient) is provided with a user identification tag for identifying the user. The user identification tag can be a RFID-tag. Other types of suitable identification tags also can be used, such as a tag based on Bluetooth technology or Near Field Communication (NFC).

Each user (the sender, the forwarding agent and the recipient) can be an individual or it can be a group of individuals. For example can the forwarding agent be represented by a group of employees, each having similar or even identical RFID-tags.

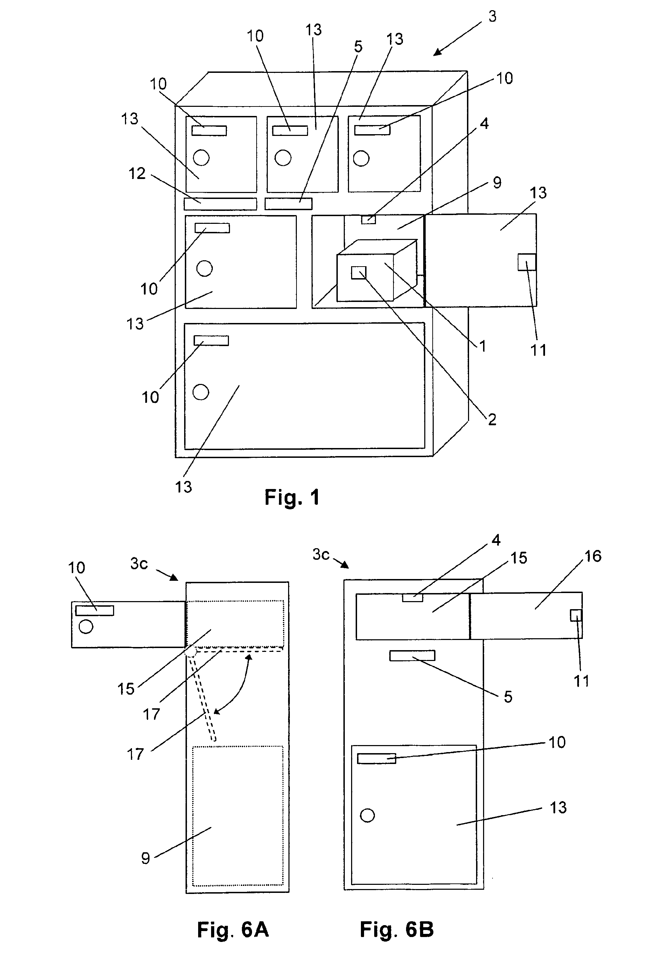

Figure 1, to which reference is made, illustrates a parcel receiving and/or delivering unit 3 according to an embodiment of the present invention.

The parcel receiving and/or delivering unit 3 comprises a parcel information receiving unit 4. The parcel information receiving unit 4 is adapted to receive information from the parcel identification tag 2. As mentioned above the parcel identification tag 2 is a RFID-tag, the parcel information receiving unit 4 is in such a case adapted to receive information from a RFID-tag by means well known to the person skilled in the art.

The parcel receiving and/or delivering unit 3 also comprises a user information receiving unit 5. The user information receiving unit 5 is adapted to receive information from said user identification tag, which is associated with a user (or a group of users) for identifying the user. As mentioned above the user identification tag can be a RFID-tag, the user information receiving unit 5 is in such a case adapted to receive information from a RFID-tag by means well known to the person skilled in the art.

The information associated with the parcel identification tag 2 comprises information about the recipient. For example, the information associated with the parcel identification tag 2 can be the recipients name and address, information regarding if the recipient is on vacation or not, or other suitable information usable when sending and/or delivering parcels 1.

Further, the information associated with the parcel identification tag 2 comprises information about the sender. For example, the information associated with the parcel identification tag 2 can be the senders name and address, the senders credit card number or other suitable information usable when sending and/or delivering parcels 1.

The information associated with the parcel identification tag 2 can also comprise information about the forwarding agent. For example, the information associated with the parcel identification tag 2 can be the desired forwarding agent, information associated with desired operating mode for the forwarding agent or other suitable information usable when sending and/or delivering parcels 1.

Further, the parcel receiving and/or delivering unit 3 is adapted to communicate with a database by means of a communication unit. The communication is performed over a network, such as the internet. The communication is preferably encrypted. The information associated with the parcel identification tag 2 as well as the information associated with the user identification tag is linked to said database. In the database the information associated with a specific parcel identification tag 2 is linked to the information associated with specific users, e.g. the sender of the parcel 1, the forwarding agent of the parcel 1 and the recipient of the parcel 1. All the information associated with a specific parcel identification tag 2 is stored as a specific profile in the database. The database is further liked to an internet website. The internet website is accessible by the sender, the forwarding agent and the recipient.

When sending a parcel 1, the sender fills in information in said database by logging into the website linked to the database. For example, the sender fills in information about the parcel identification tag 2 (e.g. a tag number of the parcel identification tag 2), the recipients name and address, the desired forwarding agent, the desired operating mode for the forwarding agent (e.g. urgent, normal or economic delivery), the credit card number from which a cost for the delivery of the parcel is to be charged and other suitable information usable when sending and/or delivering parcels 1. By filling in the information of the tag number of the parcel identification tag 2 all the other information filled in by the sender is associated with the specific parcel 1 having the parcel identification tag 2 with the specific tag number. By linking the information about the parcel 1 with the information about the sender, the forwarding agent and the recipient in said database, it is possible to make sorting and delivering of the parcels 1 more effective.

The information associated with a parcel identification tag is both real (such as a typed name and address of the recipient) and information linked to a profile in said database.. For example, the address of the recipient is written on the parcel identification tag as well as provided in a profile of said database whereas information about the senders credit card number only is provided in said profile in said database.

Further, still with reference to figure 1, the parcel receiving and/or delivering unit 3 comprises at least one parcel storage compartment 9. The parcel storage compartment 9 is used for placing a parcel 1 either when sending or when delivering the parcel 1. In the shown embodiment the parcel receiving and/or delivering unit 3 is provided with six parcel storage compartments 9. However, the number of parcel storage compartments 9 can be varied in order to suite the specific needs in a specific environment.

Each parcel storage compartment 9 can be provided with a parcel information receiving unit 4.

The different parcel storage compartments 9 can have different dimensions. In the, in figure 1, shown embodiment the parcel receiving and/or delivering unit 3 have parcel storage compartments 9 of three different dimensions suitable for parcels 1 with different dimensions.

Each parcel storage compartment 9 is closeable by means of a storage compartment door 13. Further, each storage compartment door 13 is lockable by means of a locking means 11. The locking means 11 can be an electronic lock with a solenoid mechanism. Providing the parcel storage compartments 9 with lockingly closeable storage compartment doors 13 makes it possible to only grant access to the parcel storage compartment 9 to a user after the user information receiving unit 5 has received information from the user identification tag thereby identifying the user. Thus, the user identifies herself by the user identification tag and subsequently the lock to the lockingly closeable storage compartment door 13 is unlocked making the door possible to open. For example, if the user is the recipient of the parcel 1, the lockingly closeable storage compartment door 13 is unlocked only if the user information receiving unit 5 has received information of the user identification tag identifying the user as the intended recipient. In the example above the verification that the user is the recipient (thus a trusted user) can be performed by checking if the user identifying herself by the user identification tag is the recipient by comparing with information in said database.

The parcel receiving and/or delivering unit 3 further comprises at least one display unit 10. For example, each of the parcel storage compartment doors 13 can be provided with a display unit 10. The display unit is adapted to display information to the user. The display information displayed on the display unit 10 can be based on information received by the parcel information receiving unit 4. Thus, the display information can be based on information in said database. E.g. the display unit 10 can display information about that the parcel 1 placed in a specific parcel storage compartment 9 is addressed to a specific recipient.

The parcel receiving and/or delivering unit 3 can also be provided with a receipt printer 12. The receipt printer 12 can e.g. provide a receipt to the sender, verifying the posting of the parcel. The paper on which the receipt printer is printing the receipt can be security paper. The printer can also print e.g. tickets or the like, such as train tickets, concert tickets etc. The printing of tickets or the like is advantageously printed on security paper. The printing of tickets can be performed in a safe manner due to that the user can identify herself by the user identification tag.

Further, the parcel receiving and/or delivering unit 3 can be provided with a calculation unit (not shown) adapted to calculate the cost for sending the parcel 1. The cost can be based on information concerning physical parameters of the parcel 1, such as weight, size and/or fragility. Further, the cost can also be based on information concerning the destination of the parcel (e.g. it is usually more expensive to send a parcel abroad than sending a parcel domestic). The cost can also be based on information concerning desired operating mode for the forwarding agent (e.g. urgent, normal or economic delivery). The calculation unit can comprise a scale or the like. The display unit 10 can display information about the cost sending the parcel 1 to the sender. The information about the cost sending the parcel 1 can be based on the cost calculated by the calculation unit, the information in said database or a combination thereof.

The parcel receiving and/or delivering unit 3 can be placed at various locations. For example, the parcel receiving and/or delivering unit 3 can be placed in a multi-family house, in a grocery store, bank or postal offices, or in a office buildings where several companies rent their officespace..

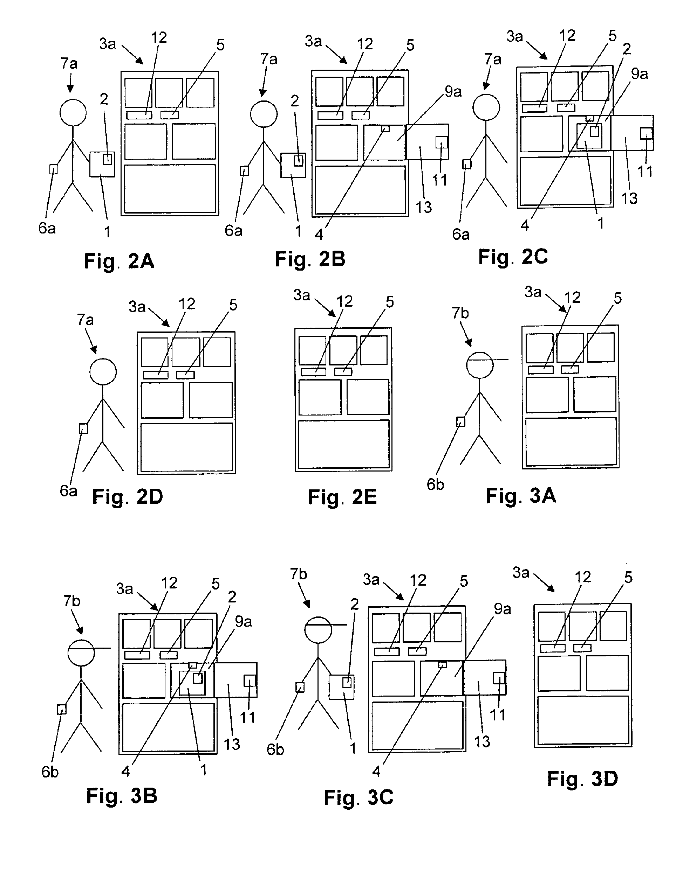

With reference to the series of figures 2A-E, the placing of a parcel 1 by a sender 7a is schematically shown.

In figure 2A the sender 7a arrives at the location where a first parcel receiving and/or delivering unit 3a is located.

By identifying herself with a user identification tag 6a the sender 7a is granted access to a free parcel storage compartment 9a of the first parcel receiving and/or delivering unit 3a. The sender 7A places the parcel 1 in the free parcel storage compartment 9A. Thus, the user information receiving unit 5 adapted to receive information from the user identification tag 6a which is associated with the sender 7a verifies, by checking in said database, that the information received from the user identification tag 6a corresponds with a known user (which may be a sender 7a). After verification of the sender 7a the locking means 11 locking the storage compartment door 13 is unlocked and the door 13 can be opened, see figure 2B.

In figure 2C the sender 7a has placed the parcel 1 inside the parcel storage compartment 9a.

In figure 2D the storage compartment door 13 is closed and the parcel information receiving unit 4 adapted to receive information from the parcel identification tag 2 receives information about the placed parcel 1. The information received from the parcel identification tag 2 is sent to said database. It is also checked if the parcel 1 is placed in the parcel storage compartment 9a. If the parcel 1 is placed in the parcel storage compartment 9a and if the parcel information receiving unit 4 has received information identifying the parcel 1, the storage compartment door 13 is locked by means of the locking means 11. After checking if the parcel 1 is placed in the parcel storage compartment 9a and if the storage compartment door 13 is locked a first receipt is automatically issued. The first receipt can be a paper receipt printed on a receipt printer 12. The first receipt can also be an e-mail, a SMS, or the like sent to the sender 7a. The issuing of the first receipt is sent to said database. In this way it is saved in the database that the sender 7a has placed the parcel 1 in the parcel storage compartment 9a. Now the sender leaves the location where the first parcel receiving and/or delivering unit 3a is located, figure 2E

Next information about the placed parcel 1 is sent to a forwarding agent 7b. The information about the placed parcel 1 can be sent via said database as an SMS, e-mail or the like.

With reference to the series of figures 3A-D, the picking up of the parcel 1 by the forwarding agent 7b is schematically shown.

In figure 3A the forwarding agent 7b arrives at the location where the first parcel receiving and/or delivering unit 3a is located.

By identifying herself with a user identification tag 6b the forwarding agent 7b is granted access to the parcel storage compartment 9a. Thus, the user information receiving unit 5 adapted to receive information from the user identification tag 6b which is associated with the forwarding agent 7b verifies, by checking in said database, that the information received from the user identification tag 6b corresponds with a forwarding agent 7b. After verification of the forwarding agent 7b the locking means 11 locking the storage compartment door 13 is unlocked and the door can be opened, see figure 3B. The forwarding agent 7b picks up the parcel 1 placed by the sender 7a in the parcel storage compartment 9a of the first parcel receiving and/or delivering unit 3a.

In figure 3C the forwarding agent 7b has picked up the parcel 1 from the parcel storage compartment 9a.

In figure 3D the storage compartment door 13 is closed. It is now checked if the parcel 1 is picked up. This check can e.g. be performed by means of the parcel information receiving unit 4 adapted to receive information from the parcel identification tag 2. The information about that the parcel is picked up is then sent to said database indicating the picking up of the parcel 1 by the forwarding agent 7b. After checking if the parcel 1 is picked up by the forwarding agent 7b a second receipt is automatically issued. The second receipt can be a paper receipt printed on a receipt printer 12. The second receipt can also be an e-mail, a SMS, or the like sent to the sender 7a. The issuing of the second receipt is sent to said database. In this way it is saved in the database that the forwarding agent 7b has picked up the parcel 1 from the parcel storage compartment 9a.

Notice that the placing of the parcel 1 by the sender 7a and the picking up of the parcel 1 by the forwarding agent 7b can be performed at different time of hours. This because the parcel 1 is stored in the lockingly closeable parcel storage compartment 9a together with that the parcel 1 do have an identification tag 2 readable by the parcel receiving and/or delivering unit 3 and that the forwarding agent 7b identifies herself by means of the user identification tag 6b when picking up the parcel 1.

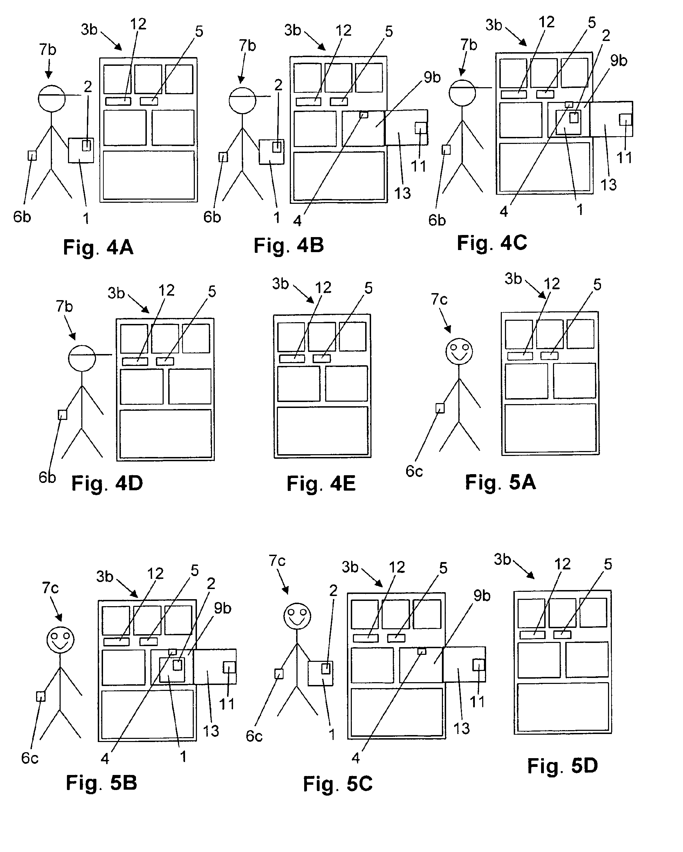

With reference to the series of figures 4A-E, the delivering of the parcel 1 by the forwarding agent 7b is schematically shown. The forwarding agent 7b delivers the parcel 1 picked up at the first parcel receiving and/or delivering unit 3a to a free parcel storage compartment 9b at a second parcel receiving and/or delivering unit 3b. It is understood that the first and second parcel receiving and/or delivering units 3a, 3b can be the same parcel receiving and/or delivering unit.

In figure 4A the forwarding agent 7b arrives at the location where the second parcel receiving and/or delivering unit 3b is located.

By identifying herself with a user identification tag 6b the forwarding agent 7b is granted access to the parcel storage compartment 9b. Thus, the user information receiving unit 5 adapted to receive information from the user identification tag 6b which is associated with the forwarding agent 7b verifies, by checking in said database, that the information received from the user identification tag 6b corresponds with a forwarding agent 7b. After verification of the forwarding agent 7b the locking means 11 locking the storage compartment door 13 is unlocked and the door 13 can be opened, see figure 4B.

In figure 4C the forwarding agent 7b has placed the parcel 1 inside the parcel storage compartment 9b.

In figure 4D the storage compartment door 13 is closed and the parcel information receiving unit 4 adapted to receive information from the parcel identification tag 2 receives information about the placed parcel 1. The information received from the parcel identification tag 2 is then sent to said database. It is also checked if the parcel 1 is placed in the parcel storage compartment 9b. If the parcel 1 is placed in the parcel storage compartment 9b, the storage compartment door 13 is locked by means of the locking means 11. After checking if the parcel 1 is placed in the parcel storage compartment 9b and if the storage compartment door 13 is locked a third receipt is automatically issued. The third receipt can be a paper receipt printed on a receipt printer 12. The third receipt can also be an e-mail, a SMS, or the like sent to the sender 7a, the forwarding agent 7b or both. The issuing of the third receipt is sent to said database. In this way it is saved in the database that the forwarding agent 7b has delivered the parcel 1. Now the forwarding agent leaves the location where the second parcel receiving and/or delivering unit 3b is located, figure 4E.

Next, information about the parcel 1 delivered by the forwarding agent 7b is sent to the recipient 7c. The information about the delivered parcel 1 can be sent via said database as an SMS, e-mail or the like. Also a display unit can display information about the delivered parcel 1, e.g. information about the recipient and/or when the parcel was delivered.

With reference to the series of figures 5A-D, the picking up of the parcel 1 by the recipient 7c is schematically shown. The recipient 7b picks up the parcel 1 (delivered by the forwarding agent 7b) from the parcel storage compartment 9b of the second parcel receiving and/or delivering unit 3b.

In figure 5A the recipient 7c arrives at the location where the second parcel receiving and/or delivering unit 3b is located.

By identifying herself with a user identification tag 6c the recipient 7c is granted access to the parcel storage compartment 9b. Thus, the user information receiving unit 5 adapted to receive information from the user identification tag 6c which is associated with the recipient 7c verifies, by checking in said database, that the information received from the user identification tag 6c corresponds with the intended recipient 7c of the parcel 1. After verification of the recipient 7c the locking means 11 locking the storage compartment door 13 is unlocked and the door 13 can be opened, see figure 5B.

In figure 5C the recipient 7c has picked up the parcel 1 from the parcel storage compartment 9b.

In figure 5D the storage compartment door 13 is closed. It is now checked if the parcel 1 was picked up. This check can e.g. be performed by means of the parcel information receiving unit 4 adapted to receive information from the parcel identification tag 2. The information about that the parcel was picked up is then sent to said database indicating the picking up of the parcel 1 by the recipient 7c. After checking if the parcel 1 was picked up by the recipient 7c a fourth receipt is automatically issued. The fourth receipt can be an e-mail, a SMS, or the like sent to the sender 7a. Thus, the sender 7a gets information about that the recipient 7c has picked up the parcel 1. The issuing of the fourth receipt is sent to said database. In this way it is saved in the database that the recipient 7c has picked up the parcel 1 from the parcel storage compartment 9b.

When the parcel has been picked up by the recipient 7c, the sender 7a can automatically be charged the cost of the sending of the parcel 1. This can be done by charging the senders credit card, charging money from an account held by the sender 7a at the forwarding agent 7b, charging the cost as an extra fee on the rent, or the like. Thus, there is no need for stamps of different values.

Notice that the delivering of the parcel 1 by the forwarding agent 7b and the picking up of the parcel 1 by the recipient 7c can be performed at different time of hours. This because the parcel 1 is stored in the lockingly closeable parcel storage compartment 9b together with the fact that the parcel 1 has an identification tag 2 readable by the parcel receiving and/or delivering unit 3 and that the recipient 7c identifies herself by means of the user identification tag 6c when picking up the parcel 1.

By the chain of receipts (first, second, third and fourth receipt) stored in said database the sending of a parcel 1 can be automatically tracked. Thus, a traceable safe sending of the parcel 1 is achieved.

Further, the information stored in said database regarding the issuance of the first, second, third and fourth receipts can be used for automatic returning of a parcel not picked up by the recipient. For example if the recipient have not picked up the parcel, thus a fourth receipt has not been issued, after three weeks the parcel will be retrieved by the forwarding agent and be returned to the sender.

The information in said database regarding the issuance of the first, second, third and fourth receipts can also be used for keeping statistics regarding the recipient. For example in order to avoid delivering a parcel to a recipient not being at home (maybe the recipient is out travelling), a check in said database can be done checking the statistic about the recipients picking up behaviours.

In figure 6 an alternative embodiment not forming part of the present invention of a parcel receiving and/or delivering unit 3c used for posting parcels by the sender is shown. The parcel receiving and/or delivering unit 3c of this alternative embodiment comprise a parcel placing compartment 15 and a parcel storage compartment 9. The parcel placing compartment 15 is arranged above the parcel storage compartment 9. The parcel placing compartment 15 is closeable by means of a parcel placing compartment door 16 and the parcel storage compartment 9 is closeable by means of a storage compartment door 13. Further, each storage compartment door 13 is lockable by means of a locking means 11. The parcel placing compartment 15 comprises a floor 17. The floor 17 of the parcel placing compartment 15 is tiltable. Thus by tilting the floor 17 of the parcel placing compartment 15 a parcel placed in the parcel placing compartment 15 slides off down to the parcel storage compartment 9. Further, the parcel receiving and/or delivering unit 3c comprises a parcel information receiving unit 4 and a user information receiving unit 5. The parcel information receiving unit 4 is adapted to receive information from a parcel identification tag and the user information receiving unit 5 is adapted to receive information from said user identification tag, which is associated with a user (or a group of users) for identifying the user. As mentioned above the parcel identification tag and/or the user identification tag can be a RFID-tag. Consequently the parcel information receiving unit 4 and the user information receiving unit 5 can be adapted to receive information from a RFID-tag by means well known to as person skilled in the art. The parcel information receiving unit 4 is arranged inside said parcel placing compartment 15. The parcel receiving and/or delivering unit 3c can also comprise a display unit 10. The display unit 10 is adapted to display information to a user.

When posting a parcel, with a parcel identification tag, in said parcel receiving and/or delivering unit 3c the sender first identifies herself as a sender with the use of a user identification tag. Subsequently the sender is granted access to the parcel placing compartment 15. After opening the parcel placing compartment door 16 the sender places the parcel in the parcel placing compartment 15. When the parcel information receiving unit 4 has received information about the placed parcel the parcel placing compartment door 16 is closeable (alternatively lockingly closable). When the parcel placing compartment door 16 is closed the parcel is slid off down into the parcel storage compartment 9, by tilting the floor 17. Next information about the placed parcel 1 is sent to a forwarding agent. If the parcel information receiving unit 4 can not receive information from the parcel identification tag the parcel placing compartment door 16 is not closeable (alternatively lockingly closable) and an error message is display on the display unit 10.

The parcel receiving and/or delivering unit 3c, shown I figure 6, do admit that many parcels are placed in the parcel storage compartment 9 by the same or by different senders. Thus, the forwarding agent only needs to open one storage compartment door 13 when picking up parcels.

It is contemplated that there are numerous modifications of the embodiments described herein, which are still within the scope of the invention as defined by the appended claims.

## Claims

1. System for safe receiving and/or delivering of a parcel (1) provided with a parcel identification tag (2), comprising:
at least one parcel information receiving unit (4) adapted to receive information from the parcel identification tag (2)
a parcel receiving and/or delivering unit (3, 3a, 3b, 3c) adapted to receive and/or deliver a parcel (1), the parcel receiving and/or delivering unit (3, 3a, 3b, 3c) comprising:
a user information receiving unit (5) adapted to receive information from a user identification tag (6a, 6b, 6c), which is associated with a user (7a, 7b, 7c) from a group consisting of a sender (7a), a forwarding agent (7b) and a recipient (7c) of the parcel, for identifying the user (7a, 7b, 7c), and
at least one lockingly closeable parcel storage compartment (9, 9a, 9b) to which access is granted only after the user information receiving unit (5) has received information of the user (7a, 7b, 7c), wherein each parcel storage compartment (9, 9a, 9b) is provided with one of said parcel information receiving units (4), wherein said parcel information receiving unit (4) is adapted to receive information about if the parcel (1) is placed in the parcel storage compartment (9, 9a, 9b), and wherein said at least one lockingly closeable parcel storage compartment (9, 9a, 9b) is locked by means of a locking means if the parcel (1) is placed in the parcel storage compartment (9, 9a, 9b) and if said parcel information receiving unit (4) has received information identifying the parcel (1), and
a communication unit adapted to communicate the information received by the user information receiving unit (5) and said at least one parcel information receiving unit (4) to a database.

2. System according to claim 1, wherein the information associated with the parcel identification tag (2) comprises information about a recipient, such as the recipients name and address, information about a sender, such as the senders name and address and/or information about a forwarding agent.

3. System according to claim 1 or 2, wherein the information associated with the parcel identification tag (2) is linked to a database and/or the information associated with the user identification tag (5) is linked to a database.

4. System according to claims 1-3, wherein the information associated with a specific parcel identification tag (2) is linked to information associated with specific user tags (6a, 6b, 6c) related to specific users (7a, 7b, 7c), such as a sender (7a) of the parcel (1), a forwarding agent (7b) of the parcel (1) and a recipient (7c) of the parcel (1), in said database.

5. System according to claims 3-4, wherein the parcel receiving and/or delivering unit (3, 3a, 3b, 3c) is adapted to communicate with said database.

6. System according to claims 1-5, wherein access is granted only after the user (6) has been verified via said database as a trusted user.

7. System according to claims 1-6, wherein the parcel receiving and/or delivering unit (3, 3a, 3b, 3c) further comprises a display unit (10) adapted to display information to a user (7a, 7b, 7c), wherein the display information is based on information received by the parcel information receiving unit (4).

8. System according to claim 1, wherein the parcel identification tag (2) and/or the user identification tag (6a, 6b, 6c) is a radio frequency identification tag.

9. Method for safe delivery of a parcel (1) provided with a parcel identification tag (2), from a first user (7a) sending the parcel to a second user (7b) acting as a forwarding agent of the parcel, comprising the steps of:
receiving information, by a user information receiving unit (5) adapted to receive information from a user identification tag (6a, 6b, 6c) which is associated with the first user (7a) for identification of the user sending the parcel (1),
granting the first user (7a) access to a parcel storage compartment (9, 9a, 9b), in which the parcel (1) can be placed,
checking if the parcel (1) is placed in the parcel storage compartment (9, 9a, 9b),
receiving information about the placed parcel (1) by a parcel information receiving unit (4) adapted to receive information from the parcel identification tag (2),
if the parcel (1) is placed in the parcel storage compartment (9, 9a, 9b) and if the parcel information receiving unit (4) has received information identifying the parcel (1), locking ,by means of a locking means, the parcel storage compartment (9, 9a, 9b), which is lockingly closeable and issuing a first receipt,
saving in a database that the first receipt has been issued,
receiving information, by the user information receiving unit (5) adapted to receive information from a user identification tag (6a, 6b, 6c) which is associated with the second user (7b) for identification of the user acting as forwarding agent of the parcel (1),
granting the second user (7b), acting as forwarding agent of the parcel (1), access to the parcel storage compartment (9, 9a, 9b), in which the parcel (1) is placed,
checking if the parcel (1) is picked up,
if the parcel (1) is picked up, issuing a second receipt, and
saving in the database that the second receipt has been issued.

10. Method according to claim 9, further comprising the step of sending information about the placed parcel (1) to the second user (7b) acting as forwarding agent of the parcel (1).

11. Method according to any one of claims 9-10, further comprising the step of checking if the second user (7b), acting as forwarding agent of the parcel (1), is a trusted user and only thereafter granting the second user (7b) access to the parcel storage compartment (9, 9a, 9b).

12. Method for safe delivery of a parcel (1) provided with a parcel identification tag (2), from a second user (7b) acting as a forwarding agent of the parcel (1) to a third user (7c) being the recipient of the parcel (1), comprising the steps of:
receiving information, by a user information receiving unit (5) adapted to receive information from a user identification tag (6a, 6b, 6c) which is associated with the second user (7b) for identification of the forwarding agent delivering the parcel (1),
granting the second user (7b), acting as a forwarding agent, access to a parcel storage compartment (9, 9a, 9b), in which the parcel (1) can be placed,
checking if the parcel (1) is placed in the parcel storage compartment (9, 9a, 9b),
receiving information from the parcel identification tag (2) by a parcel information receiving unit (4) adapted to receive information from the parcel identification tag (2),
if the parcel (1) is placed in the parcel storage compartment (9, 9a, 9b) and if the parcel information receiving unit (4) has received information identifying the parcel (1), locking, by means of a locking means, the parcel storage compartment (9, 9a, 9b), which is lockingly closeable and issuing a third receipt,
saving in a database that the third receipt has been issued,
receiving information, by a user information receiving unit (5) adapted to receive information from a user identification tag (6a, 6b, 6c)which is associated with the third user (7c) for identification of the recipient of the parcel (1),
granting the third user (7c), being the recipient of the parcel (1), access to the parcel storage compartment (9, 9a, 9b), in which the parcel (1) is placed,
checking if the parcel (1) is picked up,
if the parcel (1) is picked up, issuing a fourth receipt, and
saving in the database that the fourth receipt has been issued.

13. Method according to claim 12, further comprising the step of providing information about the placed parcel (1) to the third user (7c), being the recipient of the parcel (1).

14. Method according to any one of claims 12-13, further comprising the step of checking if the third user (7c) receiving the parcel (1) is the correct recipient and only thereafter granting the third user (7c) access to the parcel storage compartment (9, 9a, 9b).

15. Method according to any one of claims 9-14, wherein the parcel identification tag (2) and/or the user identification tag (6a, 6b, 6c) is a radio frequency identification tag.

## Patentansprüche

1. System zum sicheren Empfangen und/oder Zustellen eines Pakets (1), das mit einem Paketidentifizierungsetikett (2) versehen ist, mit:
mindestens einer Paketinformationsempfangseinheit (4), die geeignet ist, Informationen aus dem Paketidentifizierungsetikett (2) zu empfangen;
einer Paketempfangs- und/oder Zustelleinheit (3, 3a, 3b, 3c), die geeignet ist, ein Paket (1) zu empfangen und/oder zuzustellen, wobei die Paketempfangs- und/oder Zustelleinheit (3, 3a, 3b, 3c) aufweist:
eine Teilnehmerinformationsempfangseinheit (5), die geeignet ist, Informationen aus einem Teilnehmeridentifizierungsetikett (6a, 6b, 6c) zu empfangen, das einem Teilnehmer (7a, 7b, 7c) aus einer Gruppe zugeordnet ist, die aus einem Absender (7a), einem Spediteur (7b) und einem Empfänger (7c) des Pakets besteht, um den Teilnehmer (7a, 7b, 7c) zu identifizieren;
mindestens ein absperrend verschließbares Paketablagefach (9, 9a, 9b), zu dem ein Zugang nur dann gewährt wird, nachdem die Teilnehmerinformationsbezugseinheit (5) Informationen von dem Teilnehmer (7a, 7b, 7c) erhalten hat, wobei jedes Paketablagefach (9, 9a, 9b) mit einer von den Paketinformationsempfangseinheiten (4) ausgestattet ist, wobei die Paketinformationsempfangseinheit (4) geeignet ist, Informationen darüber zu empfangen, ob das Paket (1) in das Paketablagefach (9, 9a, 9b) abgelegt ist und wobei das mindestens eine absperrend verschließbare Paketablagefach (9, 9a, 9b) mithilfe eines Absperrmittels gesperrt ist, wenn das Paket (1) in das Paketablagefach (9, 9a, 9b) abgelegt ist und wenn die Paketinformationsempfangseinheit (4) Informationen empfangen hat, die das Paket (1) identifizieren, und
eine Kommunikationseinheit, die geeignet ist zum Übermitteln der Informationen, die durch die Teilnehmerinformationsempfangseinheit (5) und die mindestens eine Paketinformationsempfangseinheit (4) empfangen wurden, an eine Datenbank.

2. System nach Anspruch 1, wobei die Informationen, die dem Paketidentifizierungsetikett (2) zugeordnet sind, Informationen über einen Empfänger, wie z.B. Name und Adresse des Empfängers, Informationen über einer Absender, wie z.B. Name und Adresse des Absenders, und/oder Informationen über einen Spediteur umfassen.

3. System nach Anspruch 1 oder 2, wobei die Informationen, die dem Paketidentifizierungsetikett (2) zugeordnet sind, mit einer Datenbank verbunden sind und/oder die Informationen, die dem Teilnehmeridentifizierungsetikett (5) zugeordnet sind, mit einer Datenbank verbunden sind.

4. System nach den Ansprüchen 1 - 3, wobei die Informationen, die einem speziellen Paketidentifizierungsetikett (2) zugeordnet sind, mit Informationen verbunden sind, die speziellen Teilnehmeretiketten (6a, 6b, 6c) zugeordnet sind, welche spezielle Teilnehmer (7a, 7b, 7c) in der Datenbank betreffen, wie z.B. einen Absender (7a) des Pakets (1), einen Spediteur (7b) des Pakets (1) und einen Empfänger (7c) des Pakets (1).

5. System nach den Ansprüchen 3 - 4, wobei die Paketempfangs-und/oder Zustelleinheit (3, 3a, 3b, 3c) geeignet ist, mit der Datenbank in Verbindung zu treten.

6. System nach den Ansprüchen 1 - 5, wobei der Zugang erst dann gewährt wird, nachdem der Teilnehmer (6) über die Datenbank als ein vertrauenswürdiger Teilnehmer bestätigt wurde.

7. System nach den Ansprüchen 1 - 6, wobei die Paketempfangs-und/oder Zustelleinheit (3, 3a, 3b, 3c) ferner eine Anzeigeeinheit (10) aufweist, die geeignet ist, einem Teilnehmer (7a, 7b, 7c) Informationen anzuzeigen, wobei die Anzeigeinformationen auf Informationen basieren, die durch die Paketinformationsempfangseinheit (4) empfangen wurden

8. System nach Anspruch 1, wobei das Paketidentifizierungsetikett (2) und/oder das Teilnehmeridentifizierungsetikett (6a, 6b, 6c) ein Funkfrequenz-Identifizierungsetikett ist.

9. Verfahren zur sicheren Zustellung eines Pakets (1), das mit einem Paketidentifizierungsetikett (2) versehen ist, von einem ersten Teilnehmer (7a), der das Paket an einen zweiten Teilnehmer (7b) sendet, der als ein Spediteur des Pakets tätig wird, die Schritte umfassend zum:
Empfangen von Informationen durch eine Teilnehmerinformationsempfangseinheit (5), die geeignet ist, Informationen aus einem Teilnehmeridentifizierungsetikett (6a, 6b, 6c) zu empfangen, das dem ersten Teilnehmer (7a) zugeordnet ist, um den Teilnehmer zu identifizieren, der das Paket (1) sendet,
dem ersten Teilnehmer (7a) Zugang zu einem Paketablagefach (9, 9a, 9b) gewähren, in welches das Paket (1) abgelegt werden kann,
Überprüfen, ob das Paket (1) in dem Paketablagefach (9, 9a, 9b) abgelegt ist,
Empfangen von Informationen über das abgelegte Paket (1) durch eine Paketinformationsempfangseinheit (4), die geeignet ist, Informationen aus dem Paketidentifizierungsetikett (2) zu empfangen,
Absperren des Paketablagefachs (9, 9a, 9b), das mithilfe eines Absperrmittels absperrend verschließbar ist, und Ausgeben einer ersten Quittung, wenn das Paket (1) im Paketablagefach (9, 9a, 9b) abgelegt ist und wenn die Paketinformationsempfangseinheit (4) Informationen empfangen hat, die das Paket (1) identifizieren,
Speichern in einer Datenbank, dass die erste Quittung ausgegeben wurde,
Empfangen von Informationen durch die Teilnehmerinformationsempfangseinheit (5), die geeignet ist, Informationen aus einem Teilnehmeridentifizierungsetikett (6a, 6b, 6c) zu empfangen, das dem zweiten Teilnehmer (7b) zugeordnet ist, um den Teilnehmer, der als Spediteur des Pakets (1) tätig wird, zu identifizieren,
dem zweiten Teilnehmer (7b), der als Spediteur des Pakets (1) tätig wird, Zugang zu dem Paketablagefach (9, 9a, 9b) gewähren, in dem das Paket (1) abgelegt ist,
Überprüfen, ob das Paket (1) mitgenommen wurde,
Ausgeben einer zweiten Quittung, wenn das Paket (1) mitgenommen wurde, und
Speichern in einer Datenbank, dass die zweite Quittung ausgegeben wurde.

10. Verfahren nach Anspruch 9, ferner den Schritt zum Senden von Informationen über das abgelegte Paket (1) an den zweiten Teilnehmer (7b) umfassend, der als Spediteur des Pakets (1) tätig wird.

11. Verfahren nach einem der Ansprüche 9 - 10, ferner den Schritt umfassend, dass der zweite Teilnehmer (7b), der als Spediteur des Pakets (1) tätig wird, als ein vertrauenswürdiger Teilnehmer überprüft wird und dem zweiten Teilnehmer (7b) erst danach Zugang zu dem Paketablagefach (9, 9a, 9b) gewährt wird.

12. Verfahren zur sicheren Zustellung eines Pakets (1), das mit einem Paketidentifizierungsetikett (2) versehen ist, von einem zweiten Teilnehmer (7b), der als Spediteur des Pakets (1) tätig wird, an einen dritten Teilnehmer (7c), welcher der Empfänger des Pakets (1) ist, die Schritte umfassend zum:
Empfangen von Informationen durch eine Teilnehmerinformationsempfangseinheit (5), die geeignet ist, Informationen aus einem Teilnehmeridentifizierungsetikett (6a, 6b, 6c) zu empfangen, das dem zweiten Teilnehmer (7b) zugeordnet ist, um den Spediteur, der das Paket (1) zustellt, zu identifizieren,
dem zweiten Teilnehmer (7b), der als Spediteur des Pakets (1) tätig wird, den Zugang zu einem Paketablagefach (9, 9a, 9b) gewähren, in welches das Paket (1) abgelegt werden kann,
Überprüfen, ob das Paket (1) in dem Paketablagefach (9, 9a, 9b) abgelegt ist,
Empfangen von Informationen aus dem Paketidentifizierungsetikett (2) durch eine Paketinformationsempfangseinheit (4), die geeignet ist, Informationen aus dem Paketidentifizierungsetikett (2) zu empfangen, Absperren des Paketablagefachs (9, 9a, 9b), das mithilfe eines Absperrmittels absperrend verschließbar ist, und Ausgeben einer dritten Quittung, wenn das Paket (1) im Paketablagefach (9, 9a, 9b) abgelegt ist und wenn die Paketinformationsempfangseinheit (4) Informationen empfangen hat, die das Paket (1) identifizieren,
Speichern in einer Datenbank, dass die dritte Quittung ausgegeben wurde,
Empfangen von Informationen durch eine Teilnehmerinformationsempfangseinheit (5), die geeignet ist, Informationen aus einem Teilnehmeridentifizierungsetikett (6a, 6b, 6c) zu empfangen, das dem dritten Teilnehmer (7c) zugeordnet ist, um den Empfänger des Pakets (1) zu identifizieren,
dem dritten Teilnehmer (7c), welcher der Empfänger des Pakets (1) ist, Zugang zu dem Paketablagefach (9, 9a, 9b) gewähren, in dem das Paket (1) abgelegt ist,
Überprüfen, ob das Paket (1) mitgenommen wurde,
Ausgeben einer vierten Quittung, wenn das Paket (1) mitgenommen wurde, und
Speichern in einer Datenbank, dass die vierte Quittung ausgegeben wurde.

13. Verfahren nach Anspruch 12, ferner den Schritt zum Bereitstellen von Informationen über das abgelegte Paket (1) an den dritten Teilnehmer (7c) umfassend, welcher der Empfänger des Pakets (1) ist.

14. Verfahren nach einem der Ansprüche 12 - 13, ferner den Schritt zum Überprüfen umfassend, ob der dritte Teilnehmer (7c), der das Paket (1) empfängt, der korrekte Empfänger ist und erst danach dem dritten Teilnehmer (7c) den Zugang zu dem Paketablagefach (9, 9a, 9b) gewähren.

15. System nach einem der Ansprüche 9 - 14, wobei das Paketidentifizierungsetikett (2) und/oder das Teilnehmeridentifizierungsetikett (6a, 6b, 6c) ein Funkfrequenz-Identifizierungsetikett ist.

## Revendications

1. Système de réception et/ou de livraison sécurisée d'un colis (1) pourvu d'une étiquette d'identification de colis (2), comprenant :
au moins une unité de réception d'informations de colis (4) apte à recevoir des informations de l'étiquette d'identification de colis (2),
une unité de réception et/ou de livraison de colis (3, 3a, 3b, 3c) apte à recevoir et/ou livrer un colis (1), l'unité de réception et/ou de livraison de colis (3, 3a, 3b, 3c) comprenant :
une unité de réception d'informations d'utilisateur (5) apte à recevoir des informations d'une étiquette d'identification d'utilisateur (6a, 6b, 6c), qui est associée à un utilisateur (7a, 7b, 7c) à partir d'un groupe se composant d'un expéditeur (7a), un transitaire (7b) et un destinataire (7c) du colis, pour identifier l'utilisateur (7a, 7b, 7c), et
au moins un compartiment de stockage de colis pouvant être fermé par verrouillage (9, 9a, 9b) dont l'accès est octroyé uniquement après que l'unité de réception d'informations d'utilisateur (5) a reçu des informations de l'utilisateur (7a, 7b, 7c), dans lequel chaque compartiment de stockage de colis (9, 9a, 9b) est pourvu de l'une desdites unités de réception d'informations de colis (4), dans lequel ladite unité de réception d'informations de colis (4) est apte à recevoir des informations indiquant si le colis (1) est placé dans le compartiment de stockage de colis (9, 9a, 9b), et dans lequel ledit au moins un compartiment de stockage de colis pouvant être fermé par verrouillage (9, 9a, 9b) est verrouillé au moyen d'un moyen de verrouillage si le colis (1) est placé dans le compartiment de stockage de colis (9, 9a, 9b) et si ladite unité de réception d'informations de colis (4) a reçu des informations identifiant le colis (1), et
une unité de communication apte à communiquer les informations reçues par l'unité de réception d'informations d'utilisateur (5) et ladite au moins une unité de réception d'informations de colis (4) à une base de données.

2. Système selon la revendication 1, dans lequel les informations associées à l'étiquette d'identification de colis (2) comprennent des informations sur un destinataire, comme le nom et l'adresse du destinataire, des informations sur un expéditeur, comme le nom et l'adresse de l'expéditeur et/ou des informations sur un transitaire.

3. Système selon la revendication 1 ou 2, dans lequel les informations associées à l'étiquette d'identification de colis (2) sont liées à une base de données et/ou les informations associées à l'étiquette d'identification d'utilisateur (5) sont liées à une base de données.

4. Système selon les revendications 1 à 3, dans lequel les informations associées à une étiquette d'identification de colis (2) spécifique sont liées à des informations associées à des étiquettes d'utilisateur (6a, 6b, 6c) spécifiques relatives à des utilisateurs spécifiques (7a, 7b, 7c), comme un expéditeur (7a) du colis (1), un transitaire (7b) du colis (1) et un destinataire (7c) du colis (1), dans ladite base de données.

5. Système selon les revendications 3 et 4, dans lequel l'unité de réception et/ou de livraison de colis (3, 3a, 3b, 3c) est apte à communiquer avec ladite base de données.

6. Système selon les revendications 1 à 5, dans lequel l'accès est octroyé uniquement après que l'utilisateur (6) a été vérifié par l'intermédiaire de ladite base de données en tant qu'utilisateur de confiance.

7. Système selon les revendications 1 à 6, dans lequel l'unité de réception et/ou de livraison de colis (3, 3a, 3b, 3c) comprend en outre une unité d'affichage (10) apte à afficher des informations sur un utilisateur (7a, 7b, 7c), dans lequel les informations d'affichage sont basées sur des informations reçues par l'unité de réception d'informations de colis (4).

8. Système selon la revendication 1, dans lequel l'étiquette d'identification de colis (2) et/ou l'étiquette d'identification d'utilisateur (6a, 6b, 6c) est une étiquette d'identification par radiofréquence.

9. Procédé de livraison sécurisée d'un colis (1) pourvu d'une étiquette d'identification de colis (2), à partir d'un premier utilisateur (7a) expédiant le colis à un deuxième utilisateur (7b) agissant en tant que transitaire du colis, comprenant les étapes de :
la réception d'informations, par une unité de réception d'informations d'utilisateur (5) apte à recevoir des informations à partir d'une étiquette d'identification d'utilisateur (6a, 6b, 6c) qui est associée au premier utilisateur (7a) pour l'identification de l'utilisateur expédiant le colis (1),
l'octroi au premier utilisateur (7a) de l'accès à un compartiment de stockage de colis (9, 9a, 9b) dans lequel le colis (1) peut être placé,
la vérification si le colis (1) est placé dans le compartiment de stockage de colis (9, 9a, 9b),
la réception d'informations sur le colis placé (1) par une unité de réception d'informations de colis (4) apte à recevoir des informations à partir de l'étiquette d'identification de colis (2),
si le colis (1) est placé dans le compartiment de stockage de colis (9, 9a, 9b) et si l'unité de réception d'informations de colis (4) a reçu des informations identifiant le colis (1), le verrouillage, au moyen d'un moyen de verrouillage, du compartiment de stockage de colis (9, 9a, 9b), qui peut être fermé par verrouillage, et l'émission d'un premier reçu,
l'enregistrement dans une base de données que le premier reçu a été émis,
la réception d'informations, par l'unité de réception d'informations d'utilisateur (5) apte à recevoir des informations à partir d'une étiquette d'identification d'utilisateur (6a, 6b, 6c) qui est associée au deuxième utilisateur (7b) pour l'identification de l'utilisateur agissant en tant que transitaire du colis (1),
l'octroi au deuxième utilisateur (7b), agissant en tant que transitaire du colis (1), de l'accès au compartiment de stockage de colis (9, 9a, 9b) dans lequel le colis (1) est placé,
la vérification si le colis (1) a été pris,
si le colis (1) a été pris, l'émission d'un deuxième reçu, et
l'enregistrement dans la base de données que le deuxième reçu a été émis.

10. Procédé selon la revendication 9, comprenant en outre l'étape de l'envoi d'informations au sujet du colis placé (1) au deuxième utilisateur (7b) agissant en tant que transitaire du colis (1).

11. Procédé selon l'une quelconque des revendications 9 et 10, comprenant en outre l'étape de la vérification si le deuxième utilisateur (7b), agissant en tant que transitaire du colis (1), est un utilisateur de confiance et uniquement après cela l'octroi au deuxième utilisateur (7b) de l'accès au compartiment de stockage de colis (9, 9a, 9b).

12. Procédé de livraison sécurisée d'un colis (1) pourvu d'une étiquette d'identification de colis (2), à partir d'un deuxième utilisateur (7b) agissant en tant que transitaire du colis (1) à un troisième utilisateur (7c) qui est le destinataire du colis (1), comprenant les étapes de :
la réception d'informations, par une unité de réception d'informations d'utilisateur (5) apte à recevoir des informations à partir d'une étiquette d'identification d'utilisateur (6a, 6b, 6c) qui est associée au deuxième utilisateur (7b) pour l'identification du transitaire livrant le colis (1),
l'octroi au deuxième utilisateur (7b), agissant en tant que transitaire, de l'accès à un compartiment de stockage de colis (9, 9a, 9b), dans lequel le colis (1) peut être placé,
la vérification si le colis (1) est placé dans le compartiment de stockage de colis (9, 9a, 9b),
la réception d'informations à partir de l'étiquette d'identification de colis (2) par une unité de réception d'informations de colis (4) apte à recevoir des informations à partir de l'étiquette d'identification de colis (2),
si le colis (1) est placé dans le compartiment de stockage de colis (9, 9a, 9b) et si l'unité de réception d'informations de colis (4) a reçu des informations identifiant le colis (1), le verrouillage, au moyen d'un moyen de verrouillage, du compartiment de stockage de colis (9, 9a, 9b), qui peut être fermé par verrouillage et l'émission d'un troisième reçu,
l'enregistrement dans une base de données que le troisième reçu a été émis,
la réception d'informations, par une unité de réception d'informations d'utilisateur (5) apte à recevoir des informations à partir d'une étiquette d'identification d'utilisateur (6a, 6b, 6c) qui est associée au troisième utilisateur (7c) pour l'identification du destinataire du colis (1),
l'octroi au troisième utilisateur (7c), qui est le destinataire du colis (1), de l'accès au compartiment de stockage de colis (9, 9a, 9b) dans lequel le colis (1) est placé,
la vérification si le colis (1) a été pris,
si le colis (1) a été pris, l'émission d'un quatrième reçu, et
l'enregistrement dans la base de données que le quatrième reçu été émis.

13. Procédé selon la revendication 12, comprenant en outre l'étape de la fourniture d'informations au sujet du colis placé (1) au troisième utilisateur (7c), qui est le destinataire du colis (1).

14. Procédé selon l'une quelconque des revendications 12 et 13, comprenant en outre l'étape de la vérification si le troisième utilisateur (7c) recevant le colis (1) est le destinataire correct et uniquement après cela l'octroi au troisième utilisateur (7c) de l'accès au compartiment de stockage de colis (9, 9a, 9b).

15. Procédé selon l'une quelconque des revendications 9 à 14, dans lequel l'étiquette d'identification de colis (2) et/ou l'étiquette d'identification d'utilisateur (6a, 6b, 6c) est une étiquette d'identification par radiofréquence.
